# EUROPEAN PATENT APPLICATION

(11) **EP 4 793 772 A1**
(43) Date of publication of application: **19.08.2026**
(21) Application number: 24892784.0
(22) Date of filing: 24.06.2024
(51) Int. Cl.: G06F 9/50, G06F 12/14

(54) **MEMORY MANAGEMENT METHOD AND APPARATUS, DEVICE, STORAGE MEDIUM, AND COMPUTER PROGRAM**

(30) Priority: 20.11.2023 CN 202311553381
(71) Applicant: HUAWEI TECHNOLOGIES CO., LTD., Shenzhen 518129 (CN)
(72) Inventor: HU, Kekai, Shenzhen, Guangdong 518129 (CN)
(74) Representative: Gill Jennings & Every LLP
(86) International application number: PCT/CN2024/100963
(87) International publication number: WO 2025/107619

(57) **Abstract**

This application discloses a memory management method and apparatus, a device, a storage medium, and a computer program, and pertains to the field of computer technologies. The method includes: receiving a memory allocation request, where the memory allocation request is used to request to allocate a memory range to a target VM; obtaining sizes, physical addresses, and allocation statuses of a plurality of encrypted memory ranges via an operating system kernel, where the plurality of encrypted memory ranges correspond to different keys; selecting one encrypted memory range from the plurality of encrypted memory ranges as a target encrypted memory range based on the sizes and the allocation statuses of the plurality of encrypted memory ranges; and allocating the target encrypted memory range to the target VM based on a physical address of the target encrypted memory range. It can be learned that, because the operating system kernel has determined the physical address of the encrypted memory range of the target VM at a memory allocation stage, the corresponding encrypted memory range can be accessed based on the physical address. This process is applicable to different processor architectures without changing a hardware architecture.

## Description

This application claims priority to Chinese Patent Application No. 202311553381.1, filed on November 20, 2023 and entitled "MEMORY MANAGEMENT METHOD AND APPARATUS, DEVICE, STORAGE MEDIUM, AND COMPUTER PROGRAM", which is incorporated herein by reference in its entirety.

### TECHNICAL FIELD

This application relates to the field of computer technologies, and in particular, to a memory management method and apparatus, a device, a storage medium, and a computer program.

### BACKGROUND

In an advanced reduced instruction set computing machines (advanced RISC machines, ARM) hardware architecture, hardware resources may be partitioned into a rich execution environment (rich execution environment, REE) side and a trusted execution environment (trusted execution environment, TEE) side based on a trustzone (trustzone) technology. Security of the TEE side is higher than that of the REE side. A processor can operate on both the REE side and the TEE side, and can switch between the REE side and the TEE side. The REE side includes a plurality of virtual machines (virtual machines, VMs), each of which runs a guest operating system (guest OS). However, no memory encryption implementation solution is defined in the existing ARM architecture, and a key cannot be allocated to each VM in the native architecture to encrypt or decrypt data in a physical memory range corresponding to the VM. In other words, in the absence of a "one virtual machine, one key" memory encryption solution defined in the ARM architecture, data stored by each VM in a physical memory cannot be protected through encryption, limiting large-scale development of the ARM architecture in confidential computing applications.

### SUMMARY

This application provides a memory management method and apparatus, a device, a storage medium, and a computer program, to manage a plurality of encrypted memory ranges in a physical memory without changing a native architecture, thereby implementing "one virtual machine, one key" memory encryption. The technical solutions are as follows.

According to a first aspect, a memory management method is provided, where the method includes:
receiving a memory allocation request, where the memory allocation request is used to request to allocate a memory range to a target virtual machine VM; obtaining sizes, physical addresses, and allocation statuses of a plurality of encrypted memory ranges via an operating system kernel, where the allocation status indicates whether the encrypted memory range has been allocated, and the plurality of encrypted memory ranges correspond to different keys; selecting one encrypted memory range from the plurality of encrypted memory ranges as a target encrypted memory range based on the sizes and the allocation statuses of the plurality of encrypted memory ranges; and allocating the target encrypted memory range to the target VM based on a physical address of the target encrypted memory range.

The operating system kernel is responsible for creating and managing a plurality of VMs running on a physical machine, and the operating system kernel can access a physical memory. Therefore, in this application, the sizes and the physical addresses of the plurality of encrypted memory ranges are indicated to the operating system kernel, so that during creation of the VMs, the operating system kernel allocates corresponding encrypted memory ranges in the plurality of encrypted memory ranges partitioned from the physical memory to the VMs, to determine a correspondence between the VMs and the encrypted memory ranges in the operating system kernel. In this way, when any VM accesses the physical memory via the operating system kernel, the operating system kernel may directly map a virtual address of the VM to a physical address of an encrypted memory range, to read data from or write data to the corresponding encrypted memory range in the physical memory based on the physical address. This process is applicable to different processor architectures without changing a hardware architecture.

Optionally, before the obtaining the sizes, the physical addresses, and the allocation statuses of the plurality of encrypted memory ranges via the operating system kernel, the method further includes: reading encrypted-memory configuration information from boot firmware, where the encrypted-memory configuration information indicates a quantity and the sizes of the plurality of encrypted memory ranges; partitioning a physical memory into the plurality of encrypted memory ranges based on the quantity and the sizes of the plurality of encrypted memory ranges; and indicating the sizes and the physical addresses of the plurality of encrypted memory ranges to the operating system kernel.

In other words, the boot firmware of the physical machine is correspondingly modified, to write the encrypted-memory configuration information to the boot firmware. In this way, after the physical machine is powered on and started, when the boot firmware is first run, the encrypted-memory configuration information can be read from the boot firmware, and the plurality of encrypted memory ranges are partitioned from the physical memory.

Optionally, after partitioning the physical memory into the plurality of encrypted memory ranges, a processor may mark the plurality of memory encryption ranges as reserved (reserved) states, so that when an operating system is started and runs normally, the operating system is not affected by high-privilege code (for example, a hypervisor).

Optionally, after the partitioning the physical memory into the plurality of encrypted memory ranges based on the quantity and the sizes of the plurality of encrypted memory ranges, the method further includes: indicating the physical addresses of the plurality of encrypted memory ranges to a memory controller, so that the memory controller generates and stores the keys corresponding to the plurality of encrypted memory ranges.

When a plurality of VMs run on the physical machine and the plurality of VMs access the physical memory, the memory controller performs memory address translation between a virtual memory range and a physical memory range, and performs a data read/write operation in the physical memory. Therefore, after the plurality of encrypted memory ranges are partitioned from the physical memory, the physical addresses of the plurality of encrypted memory ranges further need to be indicated to the memory controller, so that the memory controller generates and stores the keys corresponding to the plurality of encrypted memory ranges.

The memory controller generates different keys for the plurality of encrypted memory ranges, that is, one encrypted memory range corresponds to one key. In this way, after the encrypted memory range is allocated to the VM, it can be ensured that data of the VM is stored in an encrypted manner by using a unique key. This implements a "one virtual machine, one key" memory encryption solution.

Optionally, before the reading the encrypted-memory information from the boot firmware, the method further includes: displaying a configuration interface, where the configuration interface is used to indicate a user to input the quantity and the sizes of the plurality of encrypted memory ranges; and obtaining the quantity and the sizes of the plurality of encrypted memory ranges from the configuration interface, and writing the quantity and the sizes of the plurality of encrypted memory ranges to the boot firmware.

The boot firmware is a program that is first run after the physical machine is started. Therefore, the quantity and the sizes of the plurality of encrypted memory ranges are written to the boot firmware, so that an encrypted-memory configuration operation can be first performed after the physical machine is powered on and started.

Optionally, after the allocating the target encrypted memory range to the target VM, the method further includes: updating an allocation status of the target encrypted memory range via the operating system kernel, to indicate that the target encrypted memory range has been allocated.

Optionally, the method further includes: in response to a shutdown request of the target VM, releasing the target encrypted memory range, and updating the allocation status of the target encrypted memory range via the operating system kernel, to indicate that the target encrypted memory range has not been allocated.

It can be learned that, when the operating system kernel stores the sizes and the physical addresses of the plurality of encrypted memory ranges, the operating system kernel may directly allocate the encrypted memory range to the target VM during creation of the target VM, to determine a correspondence between the target VM and the target encrypted memory range; the operating system kernel may access the corresponding target encrypted memory range when the target VM is running, to implement data reading/writing; and the operating system kernel may further release a memory resource of the target encrypted memory range in time when the target VM is shut down. In other words, in this application, allocation and management are performed on the physical memory by using the operating system kernel. During memory access, addressing is directly performed based on the physical address, association information of the VM does not need to be carried, and therefore no bus extension is needed.

Optionally, hardware resources of a physical machine are partitioned into a rich execution environment REE side and a trusted execution environment TEE side, the REE side includes a plurality of VMs, and the target VM is any one of the plurality of VMs.

According to the technical concept of this application, even if security of the REE side is lower than that of the TEE side, data of the plurality of VMs running on the REE side can be protected by using the encrypted memory ranges. This ensures data security of the plurality of VMs on the REE side.

According to a second aspect, a memory management apparatus is provided. The memory management apparatus has a function of implementing behaviors in the memory management method according to the first aspect. The memory management apparatus includes at least one module, and the at least one module is configured to implement steps of the memory management method according to the first aspect.

According to a third aspect, a computer device is provided. The computer device includes a processor and a memory, and the memory is configured to store a computer program for performing the memory management method provided in the first aspect. The processor is configured to execute the computer program stored in the memory, to implement the memory management method according to the first aspect.

Optionally, the computer device may further include a communication bus, and the communication bus is configured to establish a connection between the processor and the memory.

According to a fourth aspect, a computer-readable storage medium is provided. The storage medium stores instructions. When the instructions are run on a computer, the computer is enabled to perform steps of the memory management method according to the first aspect.

According to a fifth aspect, a computer program product including instructions is provided. When the instructions are run on a computer, the computer is enabled to perform steps of the memory management method according to the first aspect. Alternatively, a computer program is provided. When the computer program is run on a computer, the computer is enabled to perform steps of the memory management method according to the first aspect.

Technical effects achieved in the second aspect, the third aspect, the fourth aspect, and the fifth aspect are similar to technical effects achieved by the corresponding technical means in the first aspect. Details are not described herein again.

### BRIEF DESCRIPTION OF DRAWINGS

FIG. 1 is a diagram of a structure of a computer device according to an embodiment of this application;
FIG. 2 is a schematic flowchart of a memory management method according to an embodiment of this application;
FIG. 3 is a diagram of memory management logic in a processor architecture according to an embodiment of this application;
FIG. 4 is a diagram of memory management logic in another processor architecture according to an embodiment of this application;
FIG. 5A and FIG. 5B are a schematic flowchart of memory management according to an embodiment of this application; and
FIG. 6 is a diagram of a structure of a memory management apparatus according to an embodiment of this application.

### DESCRIPTION OF EMBODIMENTS

To make objectives, technical solutions, and advantages of embodiments of this application clearer, the following further describes implementations of this application in detail with reference to accompanying drawings.

For ease of understanding, before a memory management method provided in embodiments of this application is described in detail, an application context and an implementation environment of embodiments of this application are first described.

The application context of embodiments of this application is first described.

With rapid development of cloud computing, an increasing quantity of critical services and a growing volume of high-value data are migrated to the cloud, making data protection more complex. Confidential computing (confidential computing) may be used for protecting data in use, for example, data of VMs.

Confidential computing is a technology for protecting data in use by performing computation in a hardware-based trusted execution environment (trusted execution environment, TEE), that is, constructing and running a trusted execution environment based on capabilities of hardware and software of a computer device, to protect confidentiality and integrity of a program and data loaded into the TEE.

Currently, mainstream TEE solutions include chip company Intel's software guard extensions (software guard extensions, SGX) and trust domain extensions (trust domain extensions, TDX) technologies for an x86 architecture, chip company AMD's secure encrypted virtualization (secure encrypted virtualization, SEV) technology, a trustzone (trustzone) technology for an ARM architecture, and the like. Although these technologies are specifically implemented in different manners, these technologies gradually evolve to provide security solutions and services at a granularity of an encrypted VM. The encrypted VM is a VM whose data in a physical memory range corresponding to the VM is protected through encryption, where the data includes code for running the VM, data generated during running of a user process in the VM, and the like.

The SEV technology is designed to establish a VM-level TEE solution that isolates a conventional hypervisor (Hypervisor) from a trusted computing base (trusted computing base, TCB) based on memory range encryption, hardware instruction extension, an external security control processor, setting of additional flags of physical addresses, and the like. The hypervisor is also referred to as a virtual machine monitor (virtual machine monitor, VMM).

In some embodiments, the SEV technology uses an address space identifier (address space identifier, ASID) of a VM to identify code and data of the VM, that is, identify a memory range of the VM. During an entire running period of the VM, the ASID remains unchanged in a physical memory. This ensures that the data of the VM can be correctly read by the VM and is not accessed by other software in a system. When the VM reads data from or writes data to an encrypted memory range corresponding to the VM, an encryption engine based on an advanced encryption standard (advanced encryption standard, AES) encrypts or decrypts, by using a key associated with the ASID of the VM, the data read from or written to the encrypted memory range. Each VM is associated with a key of the VM by using an ASID. Therefore, another VM or the hypervisor can access only encrypted data, and strong isolation between VMs and between a VM and the hypervisor ensures data security of each VM.

Because a correspondence between an ASID and a key is stored in the AES-based encryption engine, when an encrypted memory range of a VM is accessed, bus extension needs to be performed, to carry an ASID of the VM by using an additional flag of a physical address when a memory access request is sent to the physical memory. After the memory range corresponding to the VM is determined from the physical memory based on the physical address, the data read from or written to the encrypted memory range is encrypted or decrypted by using a key corresponding to the ASID.

It should be noted that, when data in a memory range corresponding to a VM is encrypted in the x86 architecture, a memory encryption implementation solution of the TDX technology is similar to that of the SEV technology, and bus extension needs to be performed in both of the solutions, to transfer a VM identifier associated with a key of the VM to a physical memory. Then, data read from or written to the physical memory is encrypted or decrypted based on the key corresponding to the VM identifier. Therefore, details are not described herein.

In the trustzone technology for the ARM architecture, hardware resources of a computer device are partitioned into a REE side and a TEE side, and a physical memory of the computer device is partitioned into a non-secure memory and a secure memory. Code and data on the REE side are stored in the non-secure memory, code and data on the TEE side are stored in the secure memory, and security of the REE side is lower than that of the TEE side. However, no memory encryption solution is defined in the existing ARM architecture, and a "one virtual machine, one key" memory encryption solution cannot be implemented on the native ARM hardware architecture.

Based on this, an embodiment of this application provides a memory management method, to implement a "one virtual machine, one key" memory encryption solution on a computer device in an ARM architecture, so that data in memory ranges of a plurality of VMs running on the computer device is encrypted by using a plurality of keys, and no bus extension is needed.

It should be noted that in the memory management method provided in embodiments of this application, a hardware bus architecture does not need to be changed during management of encrypted memory ranges of a plurality of VMs. Therefore, the memory management method can be applied to any computer device on which a plurality of VMs run, and is unnecessarily applied only to the ARM architecture.

The implementation environment of embodiments of this application is then described.

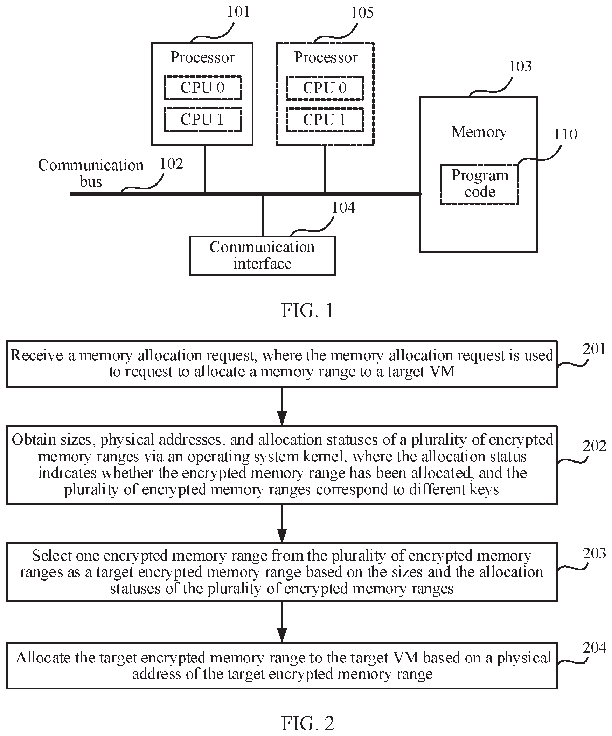

FIG. 1 is a diagram of a structure of a computer device according to an embodiment of this application. The computer device is used as a physical machine, and a plurality of VMs are created and run on the computer device. The computer device may be a server or a terminal. As shown in FIG. 1, the computer device includes at least one processor 101, a communication bus 102, a memory 103, and at least one communication interface 104.

The processor 101 may be a general-purpose central processing unit (central processing unit, CPU), a network processor (network processor, NP), a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication bus 102 is configured to transmit information between the foregoing components. The communication bus 102 may be classified as an address bus, a data bus, a control bus, or the like. For ease of representation, the bus is represented by using only one bold line in FIG. 1, but this does not mean that there is only one bus or one type of bus.

The memory 103 may be a read-only memory (read-only memory, ROM), a random access memory (random access memory, RAM), an electrically erasable programmable read-only memory (electrically erasable programmable read-only Memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be configured to carry or store expected program code in a form of instructions or a data structure and that is accessible to a computer, but is not limited thereto. The memory 103 may exist independently, and is connected to the processor 101 through the communication bus 102. Alternatively, the memory 103 may be integrated with the processor 101.

The communication interface 104 uses any transceiver-like apparatus configured to communicate with another device or a communication network. The communication interface 104 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like.

In an example, the processor 101 may include one or more CPUs, for example, a CPU 0 and a CPU 1 shown in FIG. 1.

In an example, the computer device may include a plurality of processors, for example, the processor 101 and a processor 105 shown in FIG. 1. Each of the processors may be a singlecore processor, or may be a multi-core processor. The processor herein may be one or more devices, circuits, and/or processing cores configured to process data (for example, computer program instructions).

In some embodiments, the computer device may further include an output device and an input device. The output device communicates with the processor 101, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 101, and may receive a user input in a plurality of manners. For example, the input device may be a mouse, a keyboard, a touchscreen device, a sensor device, or the like.

In some embodiments, the memory 103 is configured to store program code 110 for executing the solutions of this application, and the processor 101 may execute the program code 110 stored in the memory 103. The program code 110 may include one or more software modules. By using the processor 101 and the program code 110 in the memory 103, the computer device may implement the memory management method provided in the following embodiment in FIG. 2.

FIG. 2 is a flowchart of a memory management method according to an embodiment of this application. The method is applied to the computer device shown in FIG. 1, and is specifically applied to the processor 101 in the computer device. The computer device is used as a physical machine, and a plurality of VMs may be created and run on the computer device. As shown in FIG. 2, the method includes the following steps.

**Step 201:** Receive a memory allocation request, where the memory allocation request is used to request to allocate a memory range to a target VM.

Hardware resources of the physical machine are partitioned into a REE side and a TEE side, the REE side includes a plurality of VMs, and the target VM in step 201 is any one of the plurality of VMs.

In a possible implementation, the memory allocation request is triggered by a user of the physical machine, to indicate an operating system kernel of the physical machine to create the target VM based on the hardware resources, and allocate a memory range in a physical memory to the target VM. In addition, when allocation of the memory range to the target VM is requested, the memory allocation request may carry a size of a memory range needed by the target VM, so that during memory range allocation, the operating system kernel can partition the physical memory into a memory range that meets a requirement of the target VM.

It should be understood that the memory range allocated to the target VM may be an encrypted memory range or an unencrypted regular memory range, depending on whether there is an encrypted memory range partitioned from the physical memory and depending on a data security requirement of the target VM. If there is no encrypted memory range partitioned from the physical memory, all VMs in the physical machine use a regular memory range; if there are a plurality of encrypted memory ranges partitioned from the physical memory, encrypted memory ranges may be allocated to some VMs based on a setting of the user of the physical machine, or an encrypted memory range may be allocated to the target VM based on a request of a user of the target VM. The encrypted memory range herein is a memory range in which data that enters or leaves the encrypted memory range is encrypted or decrypted by using a key. Only a corresponding VM can access the data in the encrypted memory range, and other VMs cannot access the encrypted memory range or cannot correctly decrypt ciphertext data stored in the encrypted memory range. The regular memory range stores plaintext data, and other VMs or a hypervisor in the physical machine can also access the plaintext data.

When data is protected at a granularity of a VM, one encrypted memory range needs to be allocated to each VM, to ensure data security of the encrypted memory range corresponding to each VM. Therefore, in this embodiment of this application, the memory management method is described by using an example in which allocation of the encrypted memory range to the target VM is requested.

Optionally, the memory allocation request may further carry memory indication information, where the memory indication information indicates whether the memory range allocated to the target VM is an encrypted memory range or a regular memory encryption range. This is not limited in embodiments of this application.

**Step 202:** Obtain sizes, physical addresses, and allocation statuses of a plurality of encrypted memory ranges via the operating system kernel, where the allocation status indicates whether the encrypted memory range has been allocated, and the plurality of encrypted memory ranges correspond to different keys.

It should be understood that the operating system kernel (kernel), as a first-layer software extension of the hardware resources of the physical machine, is responsible for managing processes, a memory, device drivers, files, and a network system of an entire operating system of the physical machine, and determines performance and stability of the operating system.

In this embodiment of this application, the operating system kernel can create and manage a plurality of VMs based on the hardware resources of the physical machine. Based on this, in this embodiment of this application, during memory management, information about the plurality of encrypted memory ranges partitioned from the physical memory may be directly indicated to the operating system kernel, so that during creation of the target VM, the operating system kernel can determine a correspondence between the target VM and the encrypted memory range. Then, during subsequent memory access, a virtual memory range of the target VM is directly mapped to the corresponding encrypted memory range.

In some embodiments, before step 202 is performed, an implementation process in which the processor indicates the information about the plurality of encrypted memory ranges to the operating system kernel may be: reading encrypted-memory configuration information from boot firmware, where the encrypted-memory configuration information indicates a quantity and the sizes of the plurality of encrypted memory ranges; partitioning the physical memory into the plurality of encrypted memory ranges based on the quantity and the sizes of the plurality of encrypted memory ranges; and indicating the sizes and the physical addresses of the plurality of encrypted memory ranges to the operating system kernel.

In other words, the boot firmware of the physical machine is correspondingly modified, to write the encrypted-memory configuration information to the boot firmware. In this way, after the physical machine is powered on and started, when the boot firmware is first run, the encrypted-memory configuration information can be read from the boot firmware, and the plurality of encrypted memory ranges are partitioned from the physical memory.

Optionally, after partitioning the physical memory into the plurality of encrypted memory ranges, the processor may mark the plurality of memory encryption ranges as reserved (reserved) states, so that when the operating system is started and runs normally, the operating system is not affected by high-privilege code (for example, a hypervisor).

The encrypted-memory configuration information includes the quantity and the sizes that are of the encrypted memory ranges and that are set by the user of the physical machine, to indicate the processor to partition the physical memory, after reading the encrypted-memory configuration information, into the plurality of encrypted memory ranges based on the quantity and the sizes required by the user of the physical machine.

In a possible implementation, an implementation process of writing the encrypted-memory configuration information to the boot firmware may be: displaying a configuration interface, where the configuration interface is used to indicate a user to input the quantity and the sizes of the plurality of encrypted memory ranges; and obtaining the quantity and the sizes of the plurality of encrypted memory ranges from the configuration interface, and writing the quantity and the sizes of the plurality of encrypted memory ranges to the boot firmware.

When the encrypted-memory configuration information is written to the boot firmware, after the physical machine is started, the processor first reads the encrypted-memory configuration information from the boot firmware, and determines whether the encrypted-memory configuration information changes. If the encrypted-memory configuration information changes, a plurality of encrypted memory ranges are repartitioned from the physical memory based on updated encrypted-memory configuration information, and sizes and physical addresses of the plurality of encrypted memory ranges repartitioned from the physical memory are indicated to the operating system kernel. If the encrypted-memory configuration information does not change, the plurality of VMs deployed on the physical machine run directly based on the original configuration. In other words, when the encrypted-memory configuration information does not change, the action of indicating, by the processor, the sizes and the physical addresses of the plurality of encrypted memory ranges to the operating system kernel is performed only once.

The indicating the sizes and the physical addresses of the plurality of encrypted memory ranges to the operating system kernel includes at least the following two manners:

In a first manner, after partitioning the physical memory into the plurality of encrypted memory ranges, the processor stores the sizes and the physical addresses of the plurality of encrypted memory ranges in a system register of the physical machine, so that after the operating system of the physical machine is normally started, the operating system kernel can obtain the sizes and the physical addresses of the plurality of encrypted memory ranges from the system register.

In an example, each time after the system is started, the operating system kernel may first read the sizes and the physical addresses of the plurality of encrypted memory ranges from the system register, and update, based on the read information, the information that is about the plurality of encrypted memory ranges and that is stored in the operating system kernel.

In another example, the operating system kernel may alternatively read the sizes and the physical addresses of the plurality of encrypted memory ranges from the system register each time when a VM is newly created, to allocate an encrypted memory range to the newly created VM.

In a second manner, after partitioning the physical memory into the plurality of encrypted memory ranges, the processor transmits the sizes and the physical addresses of the plurality of encrypted memory ranges to the operating system kernel by using an advanced configuration and power management interface (advanced configuration and power management interface, ACPI).

Optionally, the operating system kernel manages the information about the plurality of encrypted memory ranges by using an array of structures, to query for the sizes and the allocation statuses of the plurality of encrypted memory ranges based on the array of structures during creation of the target VM. For example, the allocation statuses and the range sizes of the encrypted memory ranges are sequentially obtained by querying the array of structures through polling, and one encrypted memory range is selected from the encrypted memory ranges and allocated to the target VM.

In some embodiments, the processor accesses the physical memory via a memory controller. The memory controller is an electronic component that controls the physical memory in a computer system and is responsible for data exchange between the physical memory and the processor. The memory controller may be located between the processor and the physical memory, or may be integrated into the processor. When a plurality of VMs run on the physical machine and the plurality of VMs access the physical memory, the memory controller performs memory address translation between a virtual memory range and a physical memory range, and performs a data read/write operation in the physical memory.

Based on this, after the plurality of encrypted memory ranges are partitioned from the physical memory, the physical addresses of the plurality of encrypted memory ranges further need to be indicated to the memory controller, so that the memory controller generates and stores the keys corresponding to the plurality of encrypted memory ranges.

Optionally, after receiving the physical addresses of the plurality of encrypted memory ranges, the memory controller may establish a correspondence between the plurality of encrypted memory ranges and the keys based on the physical addresses of the plurality of encrypted memory ranges, and store the correspondence.

The memory controller generates different keys for the plurality of encrypted memory ranges, that is, one encrypted memory range corresponds to one key. In this way, after the encrypted memory range is allocated to the VM, it can be ensured that data of the VM is stored in an encrypted manner by using a unique key. This implements a "one virtual machine, one key" memory encryption solution.

In a possible implementation, during encryption or decryption of data that enters or leaves the physical memory, a memory encryption engine (memory encryption engine, MEE) is added to hardware of the physical machine. The MEE supports a capability of separately encrypting data in different encrypted memory ranges by using a plurality of keys. In this way, when the memory controller reads data from or writes data to an encrypted memory range, the MEE can encrypt or decrypt the read/written data by using a key corresponding to the encrypted memory range, thereby ensuring data security.

**Step 203:** Select one encrypted memory range from the plurality of encrypted memory ranges as a target encrypted memory range based on the sizes and the allocation statuses of the plurality of encrypted memory ranges.

The target encrypted memory range is an encrypted memory range that has not been allocated to a VM and that is in the plurality of encrypted memory ranges, and a size of the target encrypted memory range meets a code and data storage requirement of the target VM.

In a possible implementation, an implementation process of step 203 may be: determining, from the plurality of encrypted memory ranges, unallocated encrypted memory ranges as candidate encrypted memory ranges based on the allocation statuses of the plurality of encrypted memory ranges; and determining the target encrypted memory range from the candidate encrypted memory ranges based on sizes of the candidate encrypted memory ranges, where the size of the target encrypted memory range is not less than a size of a memory range requested to be allocated to the target VM.

**Step 204:** Allocate the target encrypted memory range to the target VM based on a physical address of the target encrypted memory range.

It should be noted that, to prevent a case in which a virtual memory range of one VM is mapped to a plurality of encrypted memory ranges and a plurality of VMs share one encrypted memory range, during allocation of the encrypted memory range to the target VM, the entire target encrypted memory range is allocated to the target VM. To be specific, the target encrypted memory range stores only code and data of the target VM, and is not shared with another VM.

In a possible implementation, an implementation process of step 204 may be: determining a virtual address of the virtual memory range of the target VM; generating an address mapping relationship between the virtual memory range and the target encrypted memory range based on the physical address of the target encrypted memory range; loading the code of the target VM into the target encrypted memory range, and running the target VM.

In some embodiments, after the target encrypted memory range is allocated to the target VM, an allocation status of the target encrypted memory range further needs to be updated via the operating system kernel, to indicate that the target encrypted memory range has been allocated.

In other words, after allocating the target encrypted memory range to the target VM, the operating system kernel marks the target encrypted memory range as allocated, and subsequently no longer allocates the target encrypted memory range to another VM for use. This prevents a case in which a plurality of VMs share one encrypted memory range, and ensures data security of the target VM.

In some embodiments, in response to a shutdown request of the target VM, the target encrypted memory range is released, and the allocation status of the target encrypted memory range is updated via the operating system kernel, to indicate that the target encrypted memory range has not been allocated.

When the operating system kernel manages the plurality of encrypted memory ranges, if the target VM is shut down, the encrypted memory range corresponding to the target VM is released in time, and the allocation status of the encrypted memory range is updated. This is similar to a process of creating the target VM. In this way, utilization of the plurality of encrypted memory ranges is improved by updating the allocation statuses of the plurality of encrypted memory ranges in time.

In summary, in the memory management method provided in this embodiment of this application, the operating system kernel manages the information about the plurality of encrypted memory ranges, for example, the physical addresses, the sizes, and the allocation statuses, and the memory controller stores the keys of the plurality of encrypted memory ranges. Based on this, when the target VM accesses the physical memory via the operating system kernel, the operating system kernel may directly map the virtual address of the target VM to the physical address of the target encrypted memory range, and then send the physical address of the target encrypted memory range to the memory controller, to indicate the memory controller to perform a data operation in the target encrypted memory range and encrypt or decrypt data by using a key corresponding to the target encrypted memory range.

It can be learned that, the operating system kernel can directly determine a physical address of an encrypted memory range of a VM based on the allocation statuses of the plurality of encrypted memory ranges, to access the corresponding encrypted memory range based on the physical address. In other words, only a physical address is transmitted between the processor and the physical memory, a VM identifier does not need to be carried, and therefore no bus extension is needed.

In this embodiment of this application, the operating system kernel is responsible for creating and managing a plurality of VMs running on the physical machine, and the operating system kernel can access the physical memory. Therefore, in this embodiment of this application, the sizes and the physical addresses of the plurality of encrypted memory ranges are indicated to the operating system kernel, so that during creation of the VMs, the operating system kernel allocates corresponding encrypted memory ranges in the plurality of encrypted memory ranges partitioned from the physical memory to the VMs, to determine a correspondence between the VMs and the encrypted memory ranges in the operating system kernel. In this way, when any VM accesses the physical memory via the operating system kernel, the operating system kernel may directly map a virtual address of the VM to a physical address of an encrypted memory range, to read data from or write data to the corresponding encrypted memory range in the physical memory based on the physical address. This process is applicable to different processor architectures without changing a hardware architecture.

For ease of understanding of the memory management method and implementation application of the method to a computer device, the following first describes a memory management process by using a processor of a typical ARM architecture as an example in embodiments of this application.

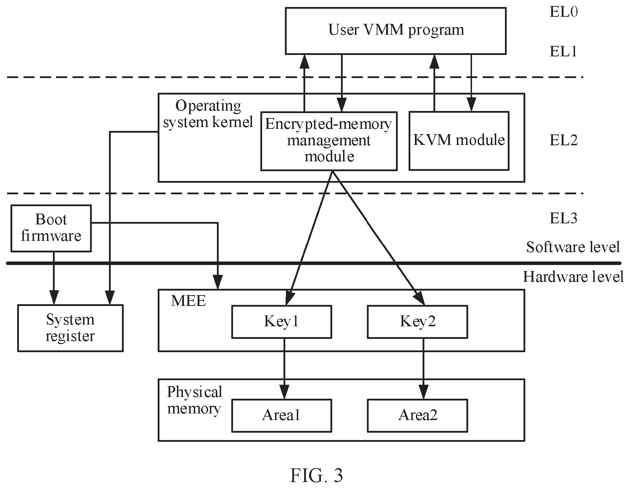

As shown in FIG. 3, based on the processor architecture, memory management may be implemented by using a combination of software and hardware in this embodiment of this application. At a hardware level, an MEE is added to a physical memory, to encrypt or decrypt data read from or written to a plurality of encrypted memory ranges in the physical memory via the MEE. This ensures security of the data when the data enters or leaves the encrypted memory ranges.

At a software level, encrypted-memory configuration information is written to boot firmware, so that when a physical machine is started, the processor can partition the physical memory into a plurality of encrypted memory ranges based on the encrypted-memory configuration information in the boot firmware, and indicate the MEE to configure different keys for the plurality of encrypted memory ranges. In this way, configuration of the encrypted memory ranges can be completed in a system startup process. After the configuration of the encrypted memory ranges is completed, an operating system is started and runs normally, and the processor stores sizes and physical addresses of the plurality of encrypted memory ranges in a system register, so that an operating system kernel can read the sizes and the physical addresses of the plurality of encrypted memory ranges from the system register, and store and manage the sizes and the physical addresses. This ensures that each VM that needs to use an encrypted memory runs in an independent encrypted memory range.

When the native architecture is not updated, an encrypted-memory management module is newly added to the operating system kernel, and is configured to manage and allocate the plurality of encrypted memory ranges, to distinguish the encrypted-memory management module from a memory management module (namely, a KVM module) that implements allocation and management of an unencrypted regular memory range in the native architecture.

When the operating system kernel stores the sizes and the physical addresses of the plurality of encrypted memory ranges, the operating system kernel may directly allocate an encrypted memory range to a target VM during creation of the target VM, to determine a correspondence between the target VM and a target encrypted memory range; the operating system kernel may access the corresponding target encrypted memory range when the target VM is running, to implement data reading/writing; and the operating system kernel may further release a memory resource of the target encrypted memory range in time when the target VM is shut down.

In a RAM architecture, a REE side includes a user mode, a kernel mode, and an HYP mode. The three modes correspond to different hardware resources on the REE side, and privilege levels of the three modes are in ascending order. To be specific, the user mode has a lowest privilege level, and the HYP mode has a highest privilege level. VMs run in the user mode and the kernel mode on the REE side, that is, a guest operating system (guest OS) of the VM runs in the user mode and the kernel mode on the REE side. In contrast, the operating system kernel of the physical machine runs in the HYP mode, and the processor can access all hardware resources (such as a register, a memory, a cache, and a peripheral) in the user mode, the kernel mode, and the HYP mode.

It should be understood that in FIG. 3, an example is merely used in which the MEE uses a key Key1 to encrypt or decrypt data that enters or leaves an encrypted memory range (Area1) of a VM1 and uses a key Key2 to encrypt or decrypt data that enters or leaves an encrypted memory range (Area2) of a VM2. In actual application, the physical memory may further include more encrypted memory ranges, the encrypted memory ranges correspond to different keys, and these encrypted memory ranges may be allocated by the operating system kernel to different VMs.

In addition, refer to FIG. 3. At the software level, the processor of the ARM architecture defines exception levels EL0 to EL3, where EL0 is a user level, and EL1 is a kernel level. In this case, a user VMM program may run at levels EL0 and EL1. EL2 and EL3 are virtualization and extension levels, and are used to implement virtualization and security extension. The operating system kernel of the physical machine runs at the level EL2, and the boot firmware of the physical machine runs at the level EL3.

Based on FIG. 3, the following describes the memory management process by using an example in which the physical machine is a server and the physical machine creates a VM by using virtualization modules such as QEMU and KVM of a Linux operating system. To differentiate from a hardware multi-key memory encryption engine (multi-key memory encryption engine, MKMEE) solution, a solution for implementing memory management based on virtualization components such as QEMU and KVM of the Linux operating system may be referred to as a software multi-key memory encryption engine (software multi-key memory encryption engine, SMKMEE).

As an emulator, the QEMU module can complete user program emulation and system virtualization emulation. During user program emulation, the QEMU can run a binary file compiled for a platform on another different platform. During system virtualization emulation, the QEMU can emulate a complete system VM. The VM has its own virtual CPU, chipset, virtual memory, and various virtual external devices, and can present a hardware view completely identical to that of the physical machine to the operating system and application software that run on the VM. The KVM module is a module configured to implement virtualization in the operating system kernel, and exports a series of interfaces to user space. Applications running in the user mode can use these interfaces to create VMs.

In specific implementation of virtualization, the KVM module is responsible for core aspects of CPU virtualization and memory virtualization, and the QEMU module serves as a usermode component and is responsible for emulating a large quantity of peripherals. The two modules are collectively referred to as a QEMU-KVM module herein.

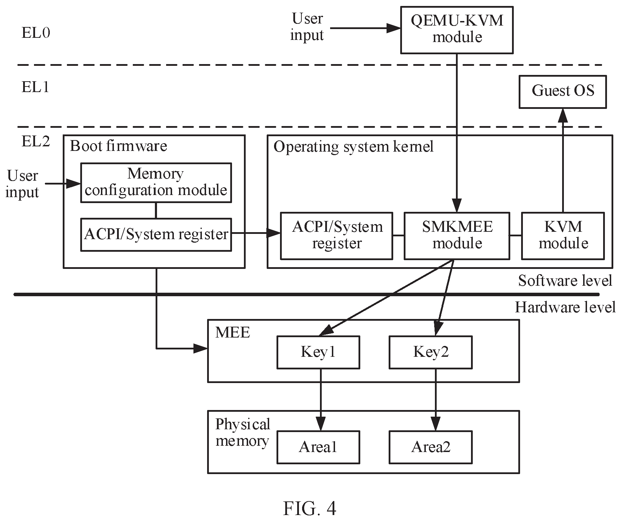

Refer to FIG. 4. At a software level, a user of a physical machine writes encrypted-memory configuration information to a memory configuration module in boot firmware, enables a memory encryption feature of an MEE, and partitions a physical memory into a plurality of encrypted memory ranges. Then, sizes and physical addresses of the plurality of encrypted memory ranges are reported to a Linux operating system kernel via a system register or an ACPI interface.

In the operating system kernel, an SMKMEE module configured to implement management and allocation of the encrypted memory ranges manages allocation statuses of the plurality of encrypted memory ranges by using an array of structures, including indicating whether an encrypted memory range has been allocated and a handle of a guest process that performs allocation for VMs by using the SMKMEE module, modification of source code of the QEMU-KVM module, and addition of an option that supports creation of a VM using an encrypted memory, so that during creation of a VM, the user can indicate whether the VM uses an encrypted memory range or an unencrypted regular memory range.

When a target VM is created by using a QEMU-KVM module, the allocation statuses of the plurality of encrypted memory ranges and sizes of the plurality of encrypted memory ranges are first obtained through query by using the SMKMEE module. If a target encrypted memory range that has not been allocated and whose size meets a requirement of the target VM is found, the SMKMEE module maps a physical address of the target encrypted memory range to a virtual memory range of the target VM, records a corresponding guest handle, and marks the target encrypted memory ranged as allocated. After the SMKMEE module successfully establishes an address mapping relationship related to the target encrypted memory range for the QEMU-KVM module, the QEMU-KVM module loads the target VM into the target encrypted memory range, and runs the target VM.

When the SMKMEE module implements the memory management method provided in embodiments of this application, a driver module newly added to the Linux operating system kernel is a core component for implementing the SMKMEE. Main functions provided by the driver module include two parts: performing memory address mapping between a virtual memory range and an encrypted memory range of a VM guest, and maintaining and managing information about the plurality of encrypted memory ranges, for example, the allocation statuses of the plurality of encrypted memory ranges.

In some embodiments, the SMKMEE module completes physical memory mapping by providing a user layer with application programming interfaces (application programming interfaces, APIs), which may include the following interfaces.

### (1) int (* open) (struct inode *, struct file *)

This interface points to a function named open. The open function takes two parameters: struct inode * and struct file *, and returns a value of an int type. In a Linux operating system, struct inode represents metadata of a file or directory, such as permission, size, and creation time. A struct file represents an open file descriptor, including information such as a read/write location and an operation mode of a file.

In addition, when an open function pointer is used to open a file and return a file descriptor, if the file fails to be opened, the function returns an error code (usually -1); otherwise, returns 0 or a non-negative file descriptor.

In this embodiment of this application, this interface is configured to provide a handle of the driver module (namely, the SMKMEE module) in the operating system kernel for an authorized user. When the user obtains the handle of the SMKMEE module by calling this interface, the SMKMEE module also obtains a handle of the user, and uses the handle as a guest identifier corresponding to the to-be-created target VM.

### (2) int (* release) (struct inode *, struct file *)

This interface points to a function named release. The release function takes two parameters: struct inode * and struct file *, and returns a value of an int type. In the Linux operating system, when a file is no longer used, the release function usually needs to be called to close the file and release related resources.

When a user process completes an operation on a file and is ready to close the file, the release function is called. If the file is successfully closed and all resources are released, the release function returns 0 or a non-negative value. If an error occurs when the file is closed, the release function returns an error code (usually -1).

In this embodiment of this application, when the target VM exits or a QEMU-KVM program terminates, the operating system kernel automatically calls this interface to clean up the encrypted memory range of the target VM by using the release function, and updates data structures of the plurality of encrypted memory ranges managed in the SMKMEE module, to indicate an allocation status of the encrypted memory range corresponding to the target VM as unallocated.

### (3) int (* mmap) (struct file *, struct vm_area_struct *)

This interface points to a function named mmap. The mmap function takes two parameters: struct file * and struct vm_area_struct *, and returns a value of an int type. In the Linux operating system, mmap is a system call used to map a file or another object to a physical memory. This interface points to a function that is in the operating system kernel and that implements this functionality.

In specific implementation, the mmap function is used to create a new physical memory address mapped to a virtual memory range of a guest process. The struct file * parameter represents a to-be-mapped file, and the struct vm_area_struct * parameter indicates information related to a memory mapping range. If the memory address mapping succeeds, the mmap function returns a pointer pointing to a new memory mapping range. If the memory address mapping fails, the mmap function returns an error code (usually -1).

In this embodiment of this application, the encrypted memory range may be mapped to the virtual memory range of the target VM by calling this interface, to establish a memory address mapping relationship between the virtual memory range of the target VM and the encrypted memory range.

### (4) int (* unlocked_ioctl) (struct file *, unsigned int, unsigned long)

This interface is used to provide additional user logic processing and supports customized options and input parameters. In the SMKMEE module, this interface is used to extend/add new options and processing logic.

### (5) int (* compat_ioctl) (struct file *, unsigned int, unsigned long)

This interface points to a function named compat_ioctl. The compat_ioctl function takes three parameters: struct file *, unsigned int, and unsigned long, and returns a value of an int type. In the Linux operating system, the compat_ioctl function is an ioctl operation used to handle compatibility issues between legacy (32-bit) user space and modern (64-bit) user space, and is usually implemented by a device driver, to support a user space program in interacting with a device by using the ioctl system call.

In this embodiment of this application, calling this interface provides a compatibility capability for a 32-bit user program to run on a 64-bit operating system kernel.

To implement a function of mapping a physical memory range to user space, the SMKMEE module needs to mark, as reserved states, the plurality of encrypted memory ranges partitioned from the physical memory based on the encrypted-memory configuration information in the boot firmware, so that the plurality of encrypted memory ranges are not affected by a memory address mapping relationship established for a regular memory range managed by the operating system kernel. In specific implementation, the SMKMEE module further needs to use the following functions.

### (1) void * memremap (resource_size_t offset, size_t size, unsigned long flags)

The memremap function is used to perform an operation on existing memory mapping, and is usually used in memory management code of an operating system instead of being directly used in a user-level program.

In the memremap function, offset is a parameter of a resource_size_t type, indicating an offset of a to-be-mapped memory range; size is a parameter of a size_t type, indicating a size of the to-be-mapped memory range; and flags is a parameter of an unsigned long type, indicating memory mapping features, for example, whether the memory range is writable, whether the memory range is executable, and whether a physical page needs to be reserved. A return value of the memremap function is a pointer of a void * type, pointing to a newly mapped memory range.

In this embodiment of this application, the function is provided by the operating system kernel, to map a segment of memory to a cacheable memory.
(2) int remap_pfn_range (structvm_area_struct * vma, unsigned long addr, unsigned long pfn, unsigned long size, pgprot_t prot)
remap_pfn_range is a function in the Linux operating system kernel, and is used to map a page frame number (page frame number, PFN) to a memory range. The function is used when a page table entry (page table entry, PTE) cannot directly represent a page frame number.

In the remap_pfn_range function, the vma parameter indicates a pointer of a to-be-modified memory area structure (virtual memory area, VMA), the addr parameter indicates a start physical address of a to-be-mapped memory range, the pfn parameter indicates a number of a page frame, the size parameter indicates a size of the to-be-mapped memory range, and prot is a memory protection flag, for example, readable, writable, or executable.

In this embodiment of this application, the function is used to map a physical address to a target start address, and the function can map only an address size that is an integer multiple of a size of a page (a fundamental unit of memory management, usually 4 KB in size).

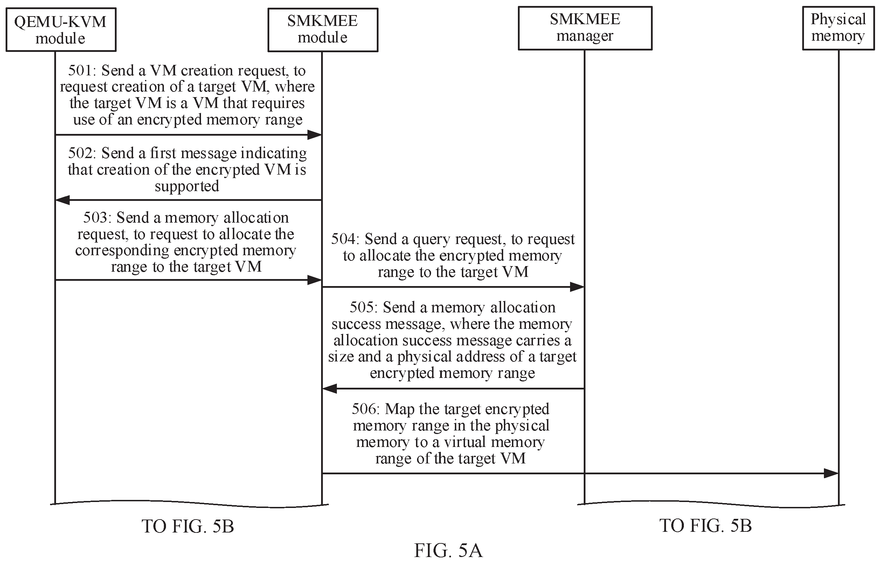

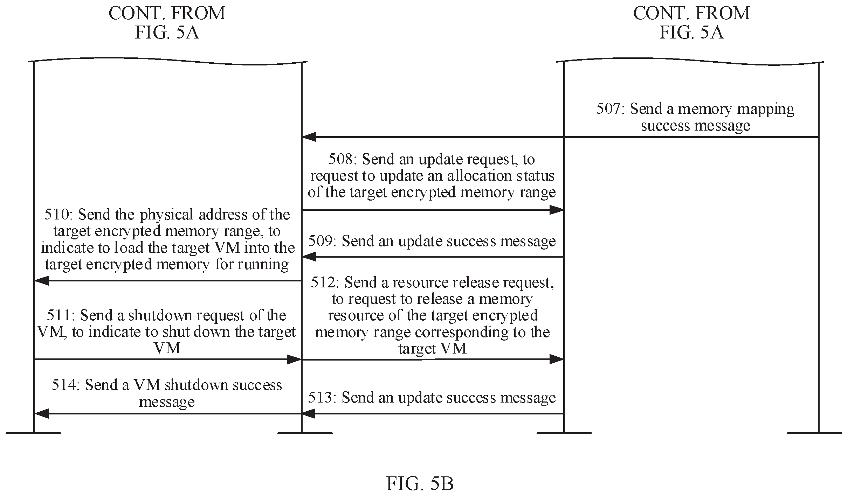

Based on the foregoing interfaces and functions, as shown in FIG. 5A and FIG. 5B, in a memory management process of an SMKMEE, memory address mapping from an encrypted memory range to a virtual memory range of a VM may be implemented by using a QEMU-KVM module, an SMKMEE module, and an SMKMEE manager. The process may specifically include the following steps.

Step 501: The QEMU-KVM module sends a VM creation request to the SMKMEE module, to request creation of a target VM, where the target VM is a VM that requires use of an encrypted memory range.

The VM creation request may be implemented by calling the foregoing open function.

Step 502: In response to the VM creation request, the SMKMEE module returns a first message (for example, ok) indicating that creation of the target VM is supported.

In response to the VM creation request, the SMKMEE module may alternatively return a second message (for example, an error) indicating that creation of the target VM is not supported.

Step 503: The QEMU-KVM module sends a memory allocation request to the SMKMEE module in response to the first message, to request to allocate the corresponding encrypted memory range to the target VM.

The memory allocation request may be implemented by calling the foregoing mmap function. The memory allocation request carries a size of the encrypted memory range needed by the target VM.

Step 504: The SMKMEE module sends a query request to the SMKMEE manager in response to the memory allocation request.

The query request is used to request the SMKMEE manager to allocate the encrypted memory range to the target VM.

Step 505: If determining, from a plurality of encrypted memory ranges based on the size of the encrypted memory range needed by the target VM, a target encrypted memory range that meets a requirement of the target VM, the SMKMEE manager sends a memory allocation success message to the SMKMEE module, where the memory allocation success message carries a size and a physical address of the target encrypted memory range.

If failing to determine the target encrypted memory range from the plurality of encrypted memory ranges, the SMKMEE manager sends a memory allocation failure message (for example, an error) to the SMKMEE module.

Step 506: In response to the memory allocation success message, the SMKMEE module sends a memory mapping message to a physical memory, to map the target encrypted memory range in the physical memory to a virtual memory range of the target VM.

The memory address mapping may be implemented by calling the foregoing memremap function.

Step 507: If the memory mapping succeeds, the physical memory returns a memory mapping success message (for example, ok) to the SMKMEE module.

Optionally, if the memory mapping fails, the physical memory returns a memory mapping failure message to the SMKMEE module.

Step 508: The SMKMEE module sends an update request to the SMKMEE manager in response to the memory mapping success message.

The update request is used to request the SMKMEE manager to update an allocation status of the target encrypted memory range, to indicate that the target encrypted memory range has been allocated.

Step 509: The SMKMEE manager returns an update success message (for example, ok) to the SMKMEE module in response to the update request.

When the update fails, the SMKMEE manager returns an update failure message (for example, an error) to the SMKMEE module.

Step 510: If the memory mapping succeeds, the SMKMEE module sends the physical address of the target encrypted memory range to the QEMU-KVM module, to indicate the QEMU-KVM module to load the target VM into the target encrypted memory for running.

Step 511: When the target VM needs to be shut down, the QEMU-KVM module sends a shutdown request of the VM to the SMKMEE module, to indicate to shut down the target VM.

Step 512: The SMKMEE module sends a resource release request to the SMKMEE manager in response to the shutdown request of the target VM, to request to release a memory resource of the target encrypted memory range corresponding to the target VM.

The resource release request may carry identification information of the target encrypted memory range, for example, the physical address.

In specific implementation, the resource release request may be implemented by calling the foregoing release function.

Step 513: The SMKMEE manager returns a resource release success message (for example, ok) to the SMKMEE module in response to the resource release message.

When failing to release the memory resource of the target encrypted memory range, the SMKMEE manager returns a resource release failure message (for example, an error) to the SMKMEE module.

Step 514: The SMKMEE module returns a VM shutdown success message to the QEMU-KVM module in response to the resource release success message.

If the resource release fails, the SMKMEE module returns a VM shutdown failure message to the QEMU-KVM module in this case.

It should be noted that FIG. 5A and FIG. 5B focus on requests or messages transmitted between a plurality of modules. For specific operations performed by the modules, refer to the foregoing descriptions. Details are not described in FIG. 5A and FIG. 5B.

It should be understood that the embodiments in FIG. 3 to FIG. 5A and FIG. 5B are merely example implementation solutions provided to describe the memory management method provided in embodiments of this application, and do not constitute any limitation on specific implementations solution of the memory management method. Based on a same technical concept as that in embodiments of this application, a person skilled in the art may alternatively implement memory management by using other virtualization modules, interfaces, functions, and the like. This is not limited in embodiments of this application.

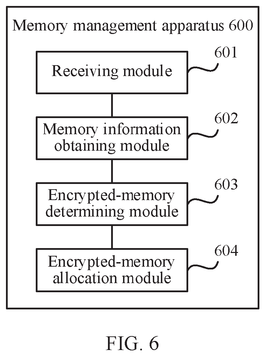

FIG. 6 is a diagram of a structure of a memory management apparatus according to an embodiment of this application. The memory management apparatus may be implemented as a part or all of a computer device by using software, hardware, or a combination thereof. As shown in FIG. 6, the memory management apparatus 600 includes: a receiving module 601, a memory information obtaining module 602, an encrypted-memory determining module 603, and an encrypted-memory allocation module 604.

The receiving module 601 is configured to receive a memory allocation request, where the memory allocation request is used to request to allocate a memory range to a target virtual machine VM.

The memory information obtaining module 602 is configured to obtain sizes, physical addresses, and allocation statuses of a plurality of encrypted memory ranges via an operating system kernel, where the allocation status indicates whether the encrypted memory range has been allocated, and the plurality of encrypted memory ranges correspond to different keys.

The encrypted-memory determining module 603 is configured to select one encrypted memory range from the plurality of encrypted memory ranges as a target encrypted memory range based on the sizes and the allocation statuses of the plurality of encrypted memory ranges.

The encrypted-memory allocation module 604 is configured to allocate the target encrypted memory range to the target VM based on a physical address of the target encrypted memory range.

Optionally, the apparatus 600 further includes:
a configuration information reading module, configured to read encrypted-memory configuration information from boot firmware, where the encrypted-memory configuration information indicates a quantity and the sizes of the plurality of encrypted memory ranges;
an encrypted-memory partitioning module, configured to partition a physical memory into the plurality of encrypted memory ranges based on the quantity and the sizes of the plurality of encrypted memory ranges; and
a memory information indication module, configured to indicate the sizes and the physical addresses of the plurality of encrypted memory ranges to the operating system kernel.

Optionally, the apparatus 600 further includes:
a memory address indication module, configured to indicate the physical addresses of the plurality of encrypted memory ranges to a memory controller, so that the memory controller generates and stores the keys corresponding to the plurality of encrypted memory ranges.

Optionally, the apparatus 600 further includes:
a display module, configured to display a configuration interface, where the configuration interface is used to indicate a user to input the quantity and the sizes of the plurality of encrypted memory ranges; and
an information writing module, configured to: obtain the quantity and the sizes of the plurality of encrypted memory ranges from the configuration interface, and write the quantity and the sizes of the plurality of encrypted memory ranges to the boot firmware.

Optionally, the apparatus 600 further includes:
a memory information update module, configured to update an allocation status of the target encrypted memory range via the operating system kernel, to indicate that the target encrypted memory range has been allocated.

Optionally, the apparatus 600 further includes:
a memory release module, configured to: in response to a shutdown request of the target VM, release the target encrypted memory range, and update the allocation status of the target encrypted memory range via the operating system kernel, to indicate that the target encrypted memory range has not been allocated.

Optionally, hardware resources of a physical machine are partitioned into a rich execution environment REE side and a trusted execution environment TEE side, the REE side includes a plurality of VMs, and the target VM is any one of the plurality of VMs.

In this embodiment of this application, the operating system kernel is responsible for creating and managing a plurality of VMs running on the physical machine, and the operating system kernel can access the physical memory. Therefore, in this embodiment of this application, the sizes and the physical addresses of the plurality of encrypted memory ranges are indicated to the operating system kernel, so that during creation of the VMs, the operating system kernel allocates corresponding encrypted memory ranges in the plurality of encrypted memory ranges partitioned from the physical memory to the VMs, to determine a correspondence between the VMs and the encrypted memory ranges in the operating system kernel. In this way, when any VM accesses the physical memory via the operating system kernel, the operating system kernel may directly map a virtual address of the VM to a physical address of an encrypted memory range, to read data from or write data to the corresponding encrypted memory range in the physical memory based on the physical address. This process is applicable to different processor architectures without changing a hardware architecture.

It should be noted that, when the memory management apparatus provided in the foregoing embodiment manages the plurality of encrypted memory ranges in the physical memory via the operating system kernel, division into the foregoing functional modules is merely used as an example for description. In actual application, the foregoing functions may be allocated to different functional modules for implementation as required. In other words, an internal structure of the apparatus may be divided into different functional modules, to implement all or some of the functions described above. In addition, the memory management apparatus provided in the foregoing embodiment belongs to a same concept as the memory management method embodiment. For a specific implementation process thereof, refer to the method embodiment. Details are not described herein again.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like. It should be noted that the computer-readable storage medium mentioned in embodiments of this application may be a non-volatile storage medium, that is, may be a non-transitory storage medium.

It should be understood that "a plurality of" mentioned in this specification means at least two. In description of embodiments of this application, "/" represents "or" unless otherwise specified. For example, A/B may represent A or B. In this specification, "and/or" describes only an association relationship for describing associated objects, and represents that three relationships may exist. For example, A and/or B may represent the following three cases: Only A exists, both A and B exist, and only B exists. In addition, for ease of clear description of the technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity or an execution sequence, and that the terms such as "first" and "second" do not indicate a definite difference.

It should be noted that information (including but not limited to user equipment information and personal information of a user), data (including but not limited to data used for analysis, stored data, and presented data), and signals in embodiments of this application are all used under authorization by the user or full authorization by all parties, and collection, use, and processing of related data need to conform to related laws, regulations, and standards of related countries and regions.

The foregoing descriptions are embodiments provided in this application, but are not intended to limit this application. Any modification, equivalent replacement, improvement, or the like made without departing from the spirit and principle of this application shall fall within the protection scope of this application.

## Claims

1. A memory management method, wherein the method comprises:
receiving a memory allocation request, wherein the memory allocation request is used to request to allocate a memory range to a target virtual machine VM;
obtaining sizes, physical addresses, and allocation statuses of a plurality of encrypted memory ranges via an operating system kernel, wherein the allocation status indicates whether the encrypted memory range has been allocated, and the plurality of encrypted memory ranges correspond to different keys;
selecting one encrypted memory range from the plurality of encrypted memory ranges as a target encrypted memory range based on the sizes and the allocation statuses of the plurality of encrypted memory ranges; and
allocating the target encrypted memory range to the target VM based on a physical address of the target encrypted memory range.

2. The method according to claim 1, wherein before the obtaining the sizes, the physical addresses, and the allocation statuses of the plurality of encrypted memory ranges via the operating system kernel, the method further comprises:
reading encrypted-memory configuration information from boot firmware, wherein the encrypted-memory configuration information indicates a quantity and the sizes of the plurality of encrypted memory ranges;
partitioning a physical memory into the plurality of encrypted memory ranges based on the quantity and the sizes of the plurality of encrypted memory ranges; and
indicating the sizes and the physical addresses of the plurality of encrypted memory ranges to the operating system kernel.

3. The method according to claim 2, wherein after the partitioning the physical memory into the plurality of encrypted memory ranges based on the quantity and the sizes of the plurality of encrypted memory ranges, the method further comprises:
indicating the physical addresses of the plurality of encrypted memory ranges to a memory controller, so that the memory controller generates and stores the keys corresponding to the plurality of encrypted memory ranges.

4. The method according to claim 2, wherein before the reading the encrypted-memory information from the boot firmware, the method further comprises:
displaying a configuration interface, wherein the configuration interface is used to indicate a user to input the quantity and the sizes of the plurality of encrypted memory ranges; and
obtaining the quantity and the sizes of the plurality of encrypted memory ranges from the configuration interface, and writing the quantity and the sizes of the plurality of encrypted memory ranges to the boot firmware.

5. The method according to any one of claims 1 to 4, wherein after the allocating the target encrypted memory range to the target VM, the method further comprises:
updating an allocation status of the target encrypted memory range via the operating system kernel, to indicate that the target encrypted memory range has been allocated.

6. The method according to any one of claims 1 to 5, wherein the method further comprises:
in response to a shutdown request of the target VM, releasing the target encrypted memory range, and updating the allocation status of the target encrypted memory range via the operating system kernel, to indicate that the target encrypted memory range has not been allocated.

7. The method according to any one of claims 1 to 6, wherein hardware resources of a physical machine are partitioned into a rich execution environment REE side and a trusted execution environment TEE side, the REE side comprises a plurality of VMs, and the target VM is any one of the plurality of VMs.

8. A memory management apparatus, wherein the apparatus comprises:
a receiving module, configured to receive a memory allocation request, wherein the memory allocation request is used to request to allocate a memory range to a target virtual machine VM;
a memory information obtaining module, configured to obtain sizes, physical addresses, and allocation statuses of a plurality of encrypted memory ranges via an operating system kernel, wherein the allocation status indicates whether the encrypted memory range has been allocated, and the plurality of encrypted memory ranges correspond to different keys;
an encrypted-memory determining module, configured to select one encrypted memory range from the plurality of encrypted memory ranges as a target encrypted memory range based on the sizes and the allocation statuses of the plurality of encrypted memory ranges; and
an encrypted-memory allocation module, configured to allocate the target encrypted memory range to the target VM based on a physical address of the target encrypted memory range.

9. The apparatus according to claim 8, wherein the apparatus further comprises:
a configuration information reading module, configured to read encrypted-memory configuration information from boot firmware, wherein the encrypted-memory configuration information indicates a quantity and the sizes of the plurality of encrypted memory ranges;
an encrypted-memory partitioning module, configured to partition a physical memory into the plurality of encrypted memory ranges based on the quantity and the sizes of the plurality of encrypted memory ranges; and
a memory information indication module, configured to indicate the sizes and the physical addresses of the plurality of encrypted memory ranges to the operating system kernel.

10. The apparatus according to claim 9, wherein the apparatus further comprises:
a memory address indication module, configured to indicate the physical addresses of the plurality of encrypted memory ranges to a memory controller, so that the memory controller generates and stores the keys corresponding to the plurality of encrypted memory ranges.

11. The apparatus according to claim 9, wherein the apparatus further comprises:
a display module, configured to display a configuration interface, wherein the configuration interface is used to indicate a user to input the quantity and the sizes of the plurality of encrypted memory ranges; and
an information writing module, configured to: obtain the quantity and the sizes of the plurality of encrypted memory ranges from the configuration interface, and write the quantity and the sizes of the plurality of encrypted memory ranges to the boot firmware.

12. The apparatus according to any one of claims 8 to 11, wherein the apparatus further comprises:
a memory information update module, configured to update an allocation status of the target encrypted memory range via the operating system kernel, to indicate that the target encrypted memory range has been allocated.

13. The apparatus according to any one of claims 8 to 12, wherein the apparatus further comprises:
a memory release module, configured to: in response to a shutdown request of the target VM, release the target encrypted memory range, and update the allocation status of the target encrypted memory range via the operating system kernel, to indicate that the target encrypted memory range has not been allocated.

14. The apparatus according to any one of claims 8 to 13, wherein hardware resources of a physical machine are partitioned into a rich execution environment REE side and a trusted execution environment TEE side, the REE side comprises a plurality of VMs, and the target VM is any one of the plurality of VMs.

15. A computer device, wherein the computer device comprises a processor and a memory;
the memory is configured to store a computer program; and
the processor is configured to execute the computer program to implement steps of the method according to any one of claims 1 to 7.

16. A computer-readable storage medium, wherein the storage medium stores a computer program, and when the computer program is executed by a processor, steps of the method according to any one of claims 1 to 7 are implemented.

17. A computer program product, wherein the computer program product stores computer instructions, and when the computer instructions are executed by a processor, steps of the method according to any one of claims 1 to 7 are implemented.
